# EUROPÄISCHE PATENTSCHRIFT

(11) **EP 2 447 583 B1**
(45) Veröffentlichungstag und Bekanntmachung des Hinweises auf die Patenterteilung: **17.02.2016**
(21) Anmeldenummer: 11179695.9
(22) Anmeldetag: 01.09.2011
(51) Int. Cl.: F16L 5/02, F16L 5/10, H02G 3/22, B60R 16/02

(54) **Dichtvorrichtung**
Sealing device
Dispositif d'étanchéité

(30) Priorität: 28.10.2010 DE 202010014721 U
(43) Veröffentlichungstag der Anmeldung: 02.05.2012
(73) Patentinhaber: Doyma GmbH & Co, 28876 Oyten (DE)
(72) Erfinder: Chikatimalla, Rajesh, 28309 Bremen (DE); Wagner, Thomas, 27777 Ganderkesee (DE)
(74) Vertreter: Eisenführ Speiser

(56) Entgegenhaltungen:
- EP-A1- 1 489 713
- EP-A1- 2 131 085
- EP-A1- 2 228 577
- WO-A1-03/027556
- DE-B3- 10 313 306
- FR-A1- 2 549 651
- FR-A1- 2 673 263
- US-A- 4 703 136
- US-A- 5 222 334

## Beschreibung

Die vorliegende Erfindung betrifft eine Dichtvorrichtung zur Abdichtung eines Spalts zwischen einer Öffnung in einem Bewandungs-Abschnitt und mindestens einer durch die Öffnung durchgeführten Leitung, mit einem elastisch verformbaren Dichtkörper, der in die Öffnung des Bewandungs-Abschnitts einführbar ist und dazu eingerichtet ist, diese abzudichten.

Dichtvorrichtungen der vorstehend genannten Art werden typischerweise dazu eingesetzt, Durchbrüche oder Durchführungsöffnungen in Bewandungs-Abschnitten von Wänden, Decken oder Bodenbereichen abzudichten. Hierbei werden Dichtheitsanforderungen sowohl an die Abdichtung der Dichtvorrichtung gegen die mindestens eine durchgeführte Leitung und an die Abdichtung der Dichtvorrichtung gegen die Öffnung des Bewandungs-Abschnitts gestellt. Die Wand kann beispielsweise eine Gebäude- oder eine Fahrzeugwand sein. Die sogenannten Durchführungsöffnungen findet man üblicherweise dort in Bewandungs-Abschnitten, wo Leitungen über Geschoss- oder Raumgrenzen hinaus zu verlegen sind.

Es sind im Stand der Technik verschiedene Dichtvorrichtungen bekannt, die zum Abdichten von Leitungs-Einführungen der vorstehenden beschriebenen Art genutzt werden. Den bekannten Dichtvorrichtungen ist gemein, dass die Dichtvorrichtungen mit der durchzuführenden Leitung bzw. den durchzuführenden Leitungen dichtend verbunden werden und sodann samt der Leitung bzw. den Leitungen in die Öffnung des Bewandungs-Abschnitts eingeführt werden. Ziel aller Dichtvorrichtungen ist es, den Raum zwischen der Innenfläche des Bewandungs-Abschnitts und der Dichtvorrichtung dichtend zu verschließen.

Dichtvorrichtungen, die für den Einsatz in Bewandungs-Abschnitten vorgesehen sind, in deren Umgebung Wasser steht und einen hydrostatischen Druck aufweisen, müssen zum Aufbringen hoher Dichtkräfte ausgebildet sein, um die anstehende Wassersäule zuverlässig am Durchdringen der Öffnung des Bewandungs-Abschnitts zu hindern. Zum Aufbringen hoher Dichtkräfte ist es notwendig, den Dichtkörper aus einem verhältnismäßig steifen Material auszuführen. Damit einhergehend ergibt sich der Nachteil, dass solche Dichtkörper in der Regel nicht manuell montier- und/oder demontierbar sind, sondern mittels einer Spanneinrichtung in den Bewandungs-Abschnitt eingeführt werden müssen.

Weiterhin sind im Stand der Technik Dichtvorrichtungen bekannt, die manuell in die Öffnung des Bewandungs-Abschnitts einführbar sind und auch manuell demontierbar sind. Ein Nachteil jener bekannten Dichtvorrichtungen ist darin zu sehen, dass aufgrund konstruktiver Merkmale oder aber aufgrund der Auswahl eines verhältnismäßig weichen Materials des Dichtkörpers keine ausreichend hohen Dichtkräfte aufgebracht werden können, so dass die Dichtvorrichtungen lediglich in Abwesenheit von Wasser oder hoher Feuchtigkeit eine zuverlässige Dichtfunktion gewährleisten können.

Die bekannten Dichtvorrichtungen sind typischerweise dazu ausgelegt, Leitungen eines vorbestimmten Durchmessers im Inneren des Dichtkörpers aufzunehmen und dichtend zu führen. In der Praxis ist man allerdings in der Regel mit Leitungen unterschiedlicher Durchmesser konfrontiert. Zum dichtenden Durchführen der jeweiligen Leitungen durch die Öffnung eines Bewandungs-Abschnitts ist es somit notwendig, eine Vielzahl unterschiedlicher Dichtvorrichtungen vorzuhalten, die jeweils für die Durchführung eines bestimmten Leitungsdurchmessers konfektioniert sind. Es besteht somit auch ein Bedarf, die Vielseitigkeit einer Dichtvorrichtung zu verbessern.

EP 2 228 577 A1 offenbart eine Dichtungsvorrichtung zum Abdichten eines Durchbruchs mit mindestens einem elastisch verformbaren Dichtkörper zwei oder mehrere Abschnitte aufweist, die an einer oder mehreren Sollbruchstellen voneinander abtrennbar sind und Griffbereiche zum Ergreifen und zum Trennen der Abschnitte an den Sollbruchstellen aufweisen.

Aus der gattungsbildenden Druckschrift EP 2 131 085 A1 ist eine Leitungsdurchführung mit einer Schichtenfolge bekannt, bei der benachbarte Schichten zu verschiedenen jeweils für sich einstückigen Elastomerkörperteilen gehören, andererseits eine Mehrzahl der Schichten zu demselben Elastomerkörperteil gehört.

Aus der Druckschrift FR 2 549 651 A1 ist eine Vorrichtung zum dichten Verschließen eines Leitungsendes einer Leitung für elektrische oder telefonische Kabel bekannt, welche eine Reihe von Scheiben aus einem elastischen Material aufweist, die dazu bestimmt sind, auf das Kabel gefädelt zu werden, wobei der äußere Durchmesser im Wesentlichen an den Innendurchmesser des Rohres und an den Durchmesser der zentralen Öffnung von dem Durchmesser des Kabels angepasst ist. Die Scheiben werden gegeneinander zwischen zwei Spannringen angezogen, so dass die Scheiben radial in Richtung des Kanals und gegen das Kabel verformt werden.

Aus EP 1 489 713 A1 ist eine dichte Wanddurchführungsvorrichtung bekannt, welche einen Stopfen von kreisförmigem Umriss mit einer äußeren Klemmnut und einem inneren Kabeldurchgang aufweist. Lippen stehen in den Durchgang hinein und üben eine elastische Kraft gegen das Kabel aus. Der Stopfen weist dabei eine ebene Oberfläche auf, die gegen eine Außenfläche der Wand anliegt, welche um eine Öffnung herum angeordnet ist. Die Stirnseite weist zwei konzentrische ringförmige Dichtrippen auf, die gegen die äußere Stirnseite platziert sind.

Druckschrift US 4,703,136 zeigt einen Dichtkörper zur Durchführung von wenigstens einem Leitmittel durch eine Maueröffnung, wobei eine Durchführung für einen Leiter in eine Wandöffnung, welche Feuer ausgesetzt sein kann, elastomere Teile aufweist, inklusive eines harten Teils, der in einen weichen Teil eingepasst ist, welche zusammen eine Leiterpassage definieren. Der weiche Teil drückt gegen die Wandöffnung. Der harte Teil, welcher aus einem Elastomermaterial besteht, enthält einen großen Anteil eines feuerverzögernden Zusatzes.

Aus der Druckschrift DE 103 13 306 B3 ist ein Quetschflansch zum Abdichten eines durch eine Öffnung hindurchgeführten Rohres bekannt, wobei der Quetschflansch ein im Wesentlichen ringförmiges elastisches Dichtelement sowie ein erstes und zweites Spannelement aufweist, mittels derer das Dichtelement quetschbar ist. Das Dichtelement ist im Wesentlichen zylindrisch ausgebildet und umfasst einen kreisringsegmentartigen innenliegenden, zu einer Stirnfläche des Dichtelements offenen Freiraum, in welchem ein elastischer Konuskörper angeordnet ist, wobei das erste Spannelement kreisringsegmentartig ausgebildet ist und eine innere Konusfläche und eine äußere Konusfläche aufweist, und in dem Freiraum innenliegend zu dem Konuskörper angeordnet ist, und wobei das zweite Spannelement kreisringsegmentartig ausgebildet und außenliegend zu dem Konuskörper angeordnet ist.

Aus Druckschrift FR 2 673 263 A1 ist eine Dichtungsbaugruppe zur flexiblen Verbindung zweier Elemente, insbesondere einer Rohrleitung und einem Mannloch bekannt, wobei die Baugruppe eine Dichtung enthält, die einen ringförmigen Hauptteil aufweist, der in das Gehäuse des Mannlochs eingreift, und einen zweiten Teil, der mit dem Hauptteil ausschließlich an seiner Basis verbunden ist. Zum Einpassen der Dichtung in eine Rohrleitung mit einem kleineren äußeren Durchmesser kann ein Keil zwischen den Hauptteil und den zweiten Teil getrieben werden.

Aus der Druckschrift US 5,222,334 ist eine Dichtvorrichtung mit einem elastomeren Kragen bekannt, welcher eine innere Oberfläche und eine äußere Oberfläche aufweist und dazu eingerichtet ist, gegen mehr als eine Größe einer Abluftleitung abzudichten, die sich vertikal durch eine zentrale Öffnung in den Kragen hindurch erstreckt. Der elastomere Kragen hat eine kreisförmige Basis, die dazu eingerichtet ist, mit einem Basisglied verbunden zu werden und weist eine zentrale Öffnung auf, die einen ersten Ring der durch einen ersten Trennkreis definiert wird, sowie einen zweiten Trennkreis, wobei wenigstens ein zusätzlicher Ring außerhalb davon vorgesehen ist, welcher abgebrochen werden kann. Jeder Ring ist selektiv mittels einer Abreißlasche trennbar, welche sich vertikal von der äußeren Oberfläche aus erstreckt.

Druckschrift WO 03/027556 A1 zeigt eine Dichtbuchse für ein oder mehrere Kabel durch eine Wandöffnung hindurch, welche neben einem Gehäuse zum Eingriff mit der Wand auch Füllmittel zum Auffüllen von Leerraum innerhalb des Gehäuses aufweist. Die Füllmittel weisen ein Füllelement auf, welches aus flexiblem Material besteht und mit einer Schlitzung versehen ist, um das eine bzw. die mehreren Kabel aufzunehmen und dichtend zu schließen, wobei die Schlitzung zwei oder mehr Schlitze umfasst.

Der vorliegenden Erfindung lag folglich die Aufgabe zu Grunde, eine Dichtvorrichtung anzugeben, welche eine verbesserte Handhabbarkeit und eine verbessere Flexibilität hinsichtlich der durchzuführenden Leitungen gewährleistet.

Die Erfindung löst die ihr zu Grunde liegende Aufgabe bei einer Dichtvorrichtung der eingangs genannten Art, indem die Dichtvorrichtung mit den Merkmalen von Anspruch 1 ausgebildet ist. Insbesondere sind ein oder mehrere Dichtkonen koaxial zu dem Dichtkörper ausgerichtet und überlappend angeordnet, wobei der oder die Dichtkonen mittels einer reversibel lösbaren Verbindung mit dem Dichtkörper verbindbar sind. Vorzugsweise ist die reversibel lösbare Verbindung als Steckverbindung ausgebildet.

Die Erfindung beruht auf der Erkenntnis, dass die Verwendung eines oder mehrerer reversibel lösbar mit dem Dichtkörper verbundene Dichtkonen den Monteur in die Lage versetzt, eine Dichtvorrichtung mit immer dem selben Dichtkörper zu verwenden und in die Öffnung des Bewandungs-Abschnitts einzusetzen, und den Dichtkonus, welcher dichtend mit der Leitung zu verbinden ist, je nach Durchmesser der durchzuführenden Leitung passend auszuwählen und sodann mit dem Dichtkörper zu verbinden. Die Dichtvorrichtung stellt sich somit als modulares Baukastensystem dar, welches auch nachträglich einen Austausch lediglich des Dichtkonus ermöglicht, falls die durchgeführte Leitung ausgetauscht und gegen eine neue Leitung mit verändertem Durchmesser ersetzt werden muss.

Die vorzugsweise als Steckverbindung ausgebildete reversibel lösbare Verbindung zwischen Dichtkonus bzw. Dichtkonen und Dichtkörper bringt den Vorteil mit sich, dass sie in der Regel ohne Werkzeug hergestellt und gelöst werden kann. Unter einer reversiblen Lösbarkeit wird hierbei die Eignung verstanden, zerstörungsfrei eine Lösung und eine erneute Verbindung herbeizuführen, und dies vorzugsweise beliebig oft zu wiederholen.

Ein weiterer besonderer Vorteil zeigt sich darin, dass innerhalb des Dichtkörpers eine Mehrzahl von Dichtkonen koaxial untereinander überlappend angeordnet werden. Der Monteur muss in einer solchen Ausführung lediglich jene Dichtkonen entfernen, die einen unpassenden Innendurchmesser zur Aufnahme der durchzuführenden Leitung aufweisen. Diese Dichtkonen können als Standard-Teile vorgehalten werden. Folglich ist der Bevorratungsaufwand im Vergleich zu einer Lösung, in der die komplette Dichtvorrichtung vorgehalten werden muss, deutlich verringert.

Gemäß einer bevorzugten Ausführungsform der vorliegenden Erfindung ist ein erster Dichtkonus an einer inneren Umfangsfläche des Dichtkörpers ausgebildet. Im Sinne einer Reduzierung der Bauteilanzahl der Dichtvorrichtung ist es vorteilhaft, einen Dichtkonus fest mit dem Dichtkörper zu verbinden und an einer inneren Umfangsfläche des Dichtkörpers anzuordnen. Dieser Dichtkonus ist vorzugsweise derjenige, welcher zur Aufnahme der größten anzunehmenden durchzuführenden Leitung eingerichtet ist. Optional sind weitere Dichtkonen zwiebelschalenartig und reversibel lösbar zu dem ersten Dichtkonus hin innerhalb des Dichtkörpers anzuordnen. Gemäß der vorstehenden Ausführungsform sind der Dichtkörper und der erste Dichtkonus einstückig als ein Bauteil ausgeführt. Alternativ wird es auch als vorteilhaft angesehen, den Dichtkörper als ein Bauteil auszuführen und den ersten Dichtkonus als separates Bauteil, welches mittels einer reversibel lösbaren Verbindung mit dem Dichtkörper verbindbar ist.

Erfindungsgemäß ist ein zweiter Dichtkonus als separates Bauteil ausgebildet und weist eine Stirnseite auf, an welcher ein flanschartiger Vorsprung ausgebildet ist, der mit einer Stirnseite des Dichtkörpers korrespondiert. Eine Ausführung bereits des zweiten Dichtkonus als separates Bauteil erhöht die Flexibilität der Dichtvorrichtung. Der Dichtkörper ist universell für jegliche Arten von Durchführungsleitung einsetzbar, da der zweite Dichtkonus und optional weitere Dichtkonen modular mit dem Dichtkörper verbindbar und von ihm lösbar ist. Der flanschartige Vorsprung des Dichtkonus ist in montiertem Zustand des Dichtkonus relativ zum Dichtkörper in Anlage mit der korrespondierenden Fläche der Stirnseite des Dichtkörpers.

Erfindungsgemäß erstrecken sich von dem flanschartigen Vorsprung des zweiten Dichtkonus ein Vorsprung oder mehrere Vorsprünge, welche jeweils mit einer Ausnehmung in der Stirnseite des Dichtkörpers korrespondieren. Die Vorsprünge, welche sich von dem flanschartigen Vorsprung aus erstrecken, sind mit der korrespondierenden Ausnehmung in der Stirnseite des Dichtkörpers vorzugsweise formschlüssig in Eingriff bringbar. Die Vorsprünge sind insbesondere dazu eingerichtet, als Verdrehsicherung zu wirken und den Dichtkonus relativ zu der Stirnseite zu positionieren.

Die erfindungsgemäße Dichtvorrichtung wird vorzugsweise dadurch weitergebildet, dass ein dritter Dichtkonus als separates Bauteil ausgebildet ist und eine Stirnseite aufweist, in welcher ein flanschartiger Vorsprung ausgebildet ist, der mit einer Stirnseite des Dichtkörpers und/oder mit einer Stirnseite des zweiten Dichtkonus korrespondiert. Vorzugsweise erstrecken sich von dem flanschartigen Vorsprung, der an dem dritten Dichtkonus ausgebildet ist, ein Vorsprung oder mehrere Vorsprünge fort, welche jeweils mit einer Ausnehmung in der Stirnseite des zweiten Dichtkonus und/oder in der Stirnseite des Dichtkörpers korrespondieren. Auf diese Weise ergibt sich ein Stecksystem, mittels dessen mehrere Dichtkonen ineinander und in den Dichtkörper steckbar sind. Gleichzeitig sind alle ineinander einführbaren Teile relativ zueinander mit hoher Wiederholgenauigkeit positionierbar.

Vorzugsweise sind der oder die sich von dem flanschartigen Vorsprung des zweiten Dichtkonus aus erstreckenden Vorsprünge zur Verformung des Dichtkörpers in die Ausnehmungen in der Stirnseite des Dichtkörpers einführbar, und/oder der oder die sich von dem flanschartigen Vorsprung des dritten Dichtkonus aus erstreckenden Vorsprünge zur Verformung des Dichtkörpers in die Ausnehmungen in der Stirnseite des Dichtkörpers oder in die Ausnehmungen in der Stirnseite des zweiten Dichtkonsus einführbar. Aus dieser Ausführung ergibt sich ein besonderer Vorteil der vorliegenden Erfindung. Der Vorteil beruht auf der Erkenntnis, dass die sich von dem ersten und/oder zweiten Dichtkonus und optional von weiteren Dichtkonen aus erstreckenden Vorsprünge eine elastische Verformung des Dichtkörpers zumindest teilweise in radialer Richtung hervorrufen, wenn die Vorsprünge in die korrespondierenden Ausnehmungen in dem Dichtkörper eingeführt werden. Infolge der elastischen Verformung des Dichtkörpers wird eine Rückstellkraft ausgebildet, die eine Rückformung des Dichtkörpers in seinen ursprünglichen Zustand bewirkt, sobald die Vorsprünge mit den korrespondierenden Ausnehmungen außer Eingriff geraten. In Folge der elastischen Verformung wird folglich die Klemmkraft erhöht, die zwischen dem Dichtkörper und den Dichtkonen einerseits und dem Dichtkörper und der Öffnung des Bewandungs-Abschnitts andererseits wirkt. Die Vorsprünge wirken nach Art eines Klemmkeils. Infolgedessen ist es möglich, den Dichtkörper aus einem verhältnismäßig weichen Material herzustellen und von Hand, ohne weitere Montagehilfsmittel wie beispielsweise Spanvorrichtungen, in die Öffnung des Bewandungs-Abschnitts einzuführen. Die Dichtkraft wird sukzessive erhöht oder alternativ überhaupt erst aufgebracht, wenn die Vorsprünge von den flanschartigen Vorsprüngen der Dichtkonen in die korrespondierenden Ausnehmungen im Dichtkörper eingreifen. Je nach Größe und Übermaß des Vorsprungs relativ zu der korrespondierenden Ausnehmung ist die Stärke der aufgebrachten Klemmkraft gezielt beeinflussbar. Überdies ergibt sich hieraus der Vorteil, dass die äußere Abmessung des Dichtkörpers eine höhere Toleranz relativ zu der Öffnung in dem Bewandungs-Abschnitt aufweisen kann, da auf Grund des weicheren Materials ein größerer Toleranzbereich mit noch zufriedenstellender Dichtwirkung abgedeckt wird. Die Vorsprünge, die sich von den flanschartigen Vorsprüngen des bzw. der Dichtkonen fort erstrecken, wirken somit gleichzeitig als Klemmelemente und als Positionierhilfen für die Dichtkonen relativ zum Dichtkörper der Dichtvorrichtung.

Erfindungsgemäß weist jeder Dichtkonus einen konischen Dicht-Abschnitt auf, dessen lichte Weite partiell geringer als der äußere Durchmesser der durchzuführenden Leitung ist. Der konische Dichtabschnitt wird infolge der Durchführung der durchzuführenden Leitung jedenfalls in dem Bereich, dessen lichte Weite geringer als der äußere Durchmesser der durchzuführenden Leitung ist, gedehnt. Infolge der Dehnung stellt sich auch zwischen der durchgeführten Leitung und den konischen Dicht-Abschnitten aufgrund der elastischen Verformung des letzteren eine Dichtkraft und folglich Dichtwirkung ein. Die Höhe der Dichtkraft ist gezielt beeinflussbar, indem das Übermaß der Leitung relativ zum konischen Abschnitt des Dichtkonus entsprechend gewählt wird, oder mittels der Härte bzw. Elastizität des konischen Dicht- Abschnitts.

Vorzugsweise ist der konische Abschnitt der Dichtkonen elastisch stärker verformbar als der Rest der Dichtkonen. Die Vorsprünge, die sich von den flanschartigen Vorsprüngen der Dichtkonen aus erstrecken, sind vorzugsweise aus einem harten Material ausgeführt, während der konische Abschnitt des Dichtkonus vorzugsweise aus einem weichen und elastisch mit geringerem Kraftaufwand verformbaren Material ausgebildet ist. Dies betrifft sowohl Ausführungsformen, in welchen der Dichtkonus ein separates Bauteil ist als auch jene Ausführungsformen, in denen der Dichtkonus einstückig mit dem Dichtkörper ausgebildet ist. In letztgenanntem Fall besteht der Dichtkonus, insbesondere der erste Dichtkonus, ausschließlich aus dem konischen Abschnitt.

Der Dichtkörper weist gemäß einer bevorzugten Ausführungsform eine äußere Umfangsfläche auf, an welcher mehrere Dichtvorsprünge ausgebildet und in Umfangsrichtung und/oder axial ausgerichtet sind. Die Dichtvorsprünge sind vorzugsweise als Lamellen ausgebildet, die im Wesentlichen ringförmig entlang der äußeren Umfangsfläche verteilt sind und zueinander axial beabstandet sind. Die Dichtvorsprünge können sich im Wesentlichen radial von der äußeren Umfangsfläche aus fort erstrecken, oder in einem Winkel schräg zu der äußeren Umfangsfläche angeordnet sein. Schräg angeordnete Dichtvorsprünge bzw. Dichtlamellen weisen eine erhöhte Widerstandskraft gegen Entfernen des Dichtkörpers aus der Öffnung des Bewandungs-Abschnitts auf, vergleichbar mit einem Widerhaken.

Die erfindungsgemäße Dichtvorrichtung wird weitergebildet durch einen im Wesentlichen ringförmigen Klemmkörper mit einer Stirnseite und sich von der Stirnseite aus erstreckenden Vorsprüngen, die zur Verformung des Dichtkörpers und/oder mindestens eines der Dichtkonen in korrespondierende Ausnehmungen in der Stirnseite des Dichtkörpers und/oder der Stirnseite des mindestens Einen der Dichtkonen einführbar sind. Der im Wesentlichen ringförmige Klemmkörper ist vorzugsweise ein Klemmelement, welches mit den sich von dessen Stirnseite aus erstreckenden Vorsprüngen formschlüssig mit dem Dichtkörper bzw. dessen korrespondierenden Ausnehmungen in Eingriff bringbar ist. Für den Fall, dass mittels der Vorsprünge selbst keine Klemmkraft durch elastische Verformung des Dichtkörpers aufgebracht werden soll oder kann, ist der Klemmkörper zum Aufbringen der zur Abdichtung benötigten Klemmkraft eingerichtet.

Der Klemmkörper ist vorzugsweise mehrteilig, insbesondere zweiteilig ausgebildet und weist eine entsprechende Anzahl Teilkörper auf. Die mehrteilige Ausführung des Klemmkörpers ermöglicht ein Einführen der Leitung und des Dichtkörpers in die Öffnung des Bewandungs- Abschnitts, bevor der Klemmkörper über die durchzuführende Leitung gestülpt worden sein muss. Der mehrteilige Klemmkörper kann vielmehr erst nach Montage des Dichtkörpers und Durchführung der Leitung mit dem Dichtkörper in Verbindung gebracht werden, um sodann die notwendige Klemm- und Dichtkraft aufzubringen. Es können verschiedene Ausführungen des Klemmkörpers vorgehalten werden, die sich in der Größe der als Klemmkeil dienenden Vorsprünge voneinander unterscheiden und jeweils zum Aufbringen einer voneinander unterschiedlichen Klemmkraft ausgebildet sind. Vorzugsweise sind die unterschiedlichen Klemmkörper farblich voneinander unterscheidbar gekennzeichnet, sodass ein Auswählen des korrekten Klemmkörpers für den Monteur erleichtert ist.

Gemäß einer weiteren bevorzugten Ausführungsform weist die Dichtvorrichtung mehrere Gruppen von Dichtkonen auf, wobei die Dichtkonen innerhalb einer Gruppe jeweils koaxial innerhalb des Umfangs des Dichtkörpers angeordnet sind, und die Gruppen zueinander parallel ausgerichtet sind. Durch das Vorsehen mehrerer Gruppen von Dichtkonen sind mehrere Leitungen gleichzeitig und im Wesentlichen parallel zueinander durch den Dichtkörper und somit durch die Öffnung des Bewandungs-Abschnitts hindurch führbar. Jeder der Dichtkonen ist vorzugsweise gemäß einer der vorstehend dargestellten bevorzugten Ausführungsformen der erfindungsgemäßen Dichtvorrichtung ausgebildet.

Ein weiteres Ausführungsbeispiel einer Dichtvorrichtung sieht vor, dass die Dichtvorrichtung eine Mehrzahl Dichtkonen aufweist, welche mindestens teilweise innerhalb des Dichtkörpers angeordnet sind und koaxial zu dem Dichtkörper ausgerichtet und seriell aneinander gereiht sind. Vorzugsweise weist jede Dichtvorrichtung einen ersten Dichtkonus auf, der an einer inneren Umfangsfläche des Dichtkörpers ausgebildet ist und einen zweiten Dichtkonus, welcher mittels einer Sollbruchstelle mit dem ersten Dichtkonus verbunden ist.

Die Dichtvorrichtung weist weiter vorzugsweise einen oder mehrere dritte Dichtkonen auf, die jeweils mittels einer Sollbruchstelle mit dem oder den jeweils benachbarten Dichtkonen verbunden sind.

Die Erfindung wird vorliegend anhand einer Vorrichtung beschrieben, welche einen ersten Dichtkonus, sowie einen zweiten und einen dritten Dichtkonus aufweist. Alternative, bevorzugte Ausführungsformen weisen darüberhinaus eine Dichtvorrichtung auf, die beispielsweise vierte, fünfte, sechste, siebte, achte, neunte, oder zehnte Dichtkonen aufweist. Diese weiteren Dichtkonen sind in analoger Weise wie die vorstehend erläuterten zweiten oder dritten Dichtkonen ausgebildet, weshalb auf die vorstehenden Erläuterungen hierzu verwiesen wird.

Gemäß einer weiteren alternativen Ausführungsform der Erfindung weist die erfindungsgemäße Dichtvorrichtung beispielsweise zwei, drei, vier, fünf, sechs, sieben, acht, neun oder zehn Gruppen von Dichtkonen auf, wobei die Dichtkonen innerhalb einer Gruppe jeweils koaxial innerhalb des Umfangs des Dichtköpers angeordnet sind, und die Gruppen zueinander im Wesentlichen parallel ausgerichtet sind. Je nachdem, wie viele Leitungen parallel durch die Öffnung des Bewandungsabschnitts durchgeführt werden sollen, wird eine entsprechende Dichtvorrichtung mit passender Anzahl Dichtkonen-Gruppen ausgewählt. Überflüssige - d.h. nicht benutzte Gruppen von Dichtkonen für die Durchführung von Leitungen sind vorzugsweise mittels eines reversibel lösbaren Verschlusselements dichtend verschließbar. Ein solches Verschlusselement ist beispielsweise bevorzugt als zylindrisch ausgebildeter Blindstopfen ausgeführt.

Die Erfindung wird im Folgenden anhand bevorzugter Ausführungsbeispiele und unter Bezugnahme auf die beigefügten Figuren näher erläutert. Hierbei zeigen:
- Figur 1: eine Explosionsdarstellung der erfindungsgemäßen Dichtvorrichtung gemäß eines ersten Ausführungsbeispiels,
- Figur 2: eine Querschnittsansicht der erfindungsgemäßen Dichtvorrichtung gemäß dem ersten Ausführungsbeispiel,
- Figur 3: eine Querschnittsansicht eines Ausbruchs der erfindungsgemäßen Dichtvorrichtung gemäß einem zweiten Ausführungsbeispiel,
- Figur 4: eine Querschnittsansicht der erfindungsgemäßen Dichtvorrichtung gemäß einem dritten Ausführungsbeispiel, und
- Figur 5: eine Draufsicht auf die Dichtvorrichtung gemäß dem in Figur 4 gezeigten Ausführungsbeispiel.

Funktional identische Elemente der verschiedenen Ausführungsbeispiele sind mit identischen Bezugszeichen versehen.

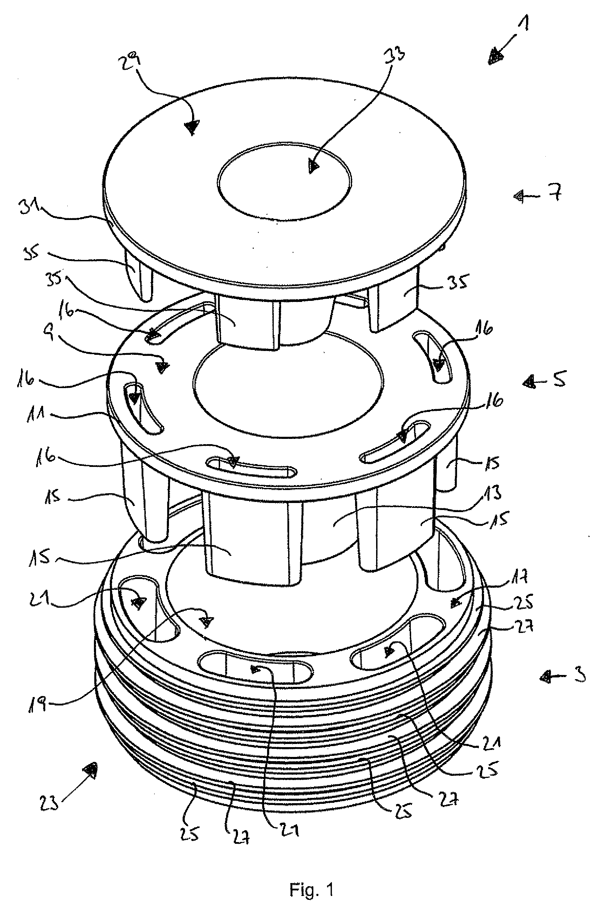

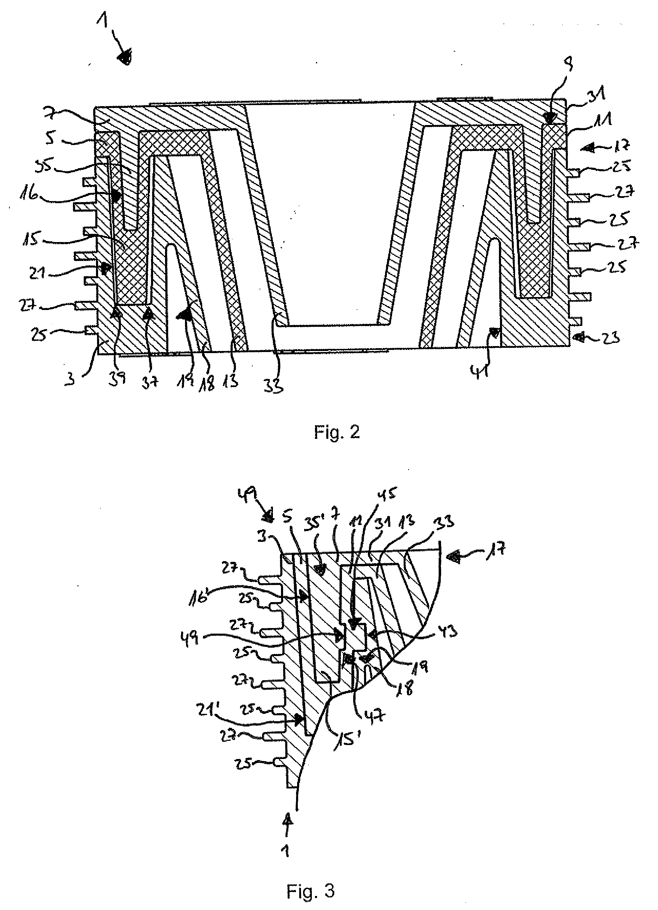

In Figur 1 ist nach Art einer Explosionszeichnung die erfindungsgemäße Dichtvorrichtung 1 in auseinandergebautem Zustand abgebildet. Die Dichtvorrichtung 1 weist einen Dichtkörper 3 auf. An einer inneren Umfangsfläche 41 (siehe Figur 2) des Dichtkörpers 3 ist ein erster Dichtkonus 19 ausgebildet. Die Dichtvorrichtung 1 weist weiterhin einen zweiten Dichtkonus 5 und einen dritten Dichtkonus 7 auf, wobei der zweite Dichtkonus 5 und der dritte Dichtkonus 7 als separates Bauteil ausgebildet sind.

Der Dichtkörper 3 weist eine Vielzahl von Ausnehmungen 21 auf, die sich von einer Stirnseite 17 des Dichtkörpers 3 aus in das Innere des Dichtkörpers 3 erstrecken. Der Dichtkörper 3 weist an einer äußeren Umfangsfläche 23 eine Vielzahl von ersten Dichtvorsprüngen 25 und zweiten Dichtvorsprüngen 27 auf. Die ersten und zweiten Dichtvorsprünge 25, 27 sind im Wesentlichen ringförmig an der äußeren Umfangsfläche 23 des Dichtkörpers 3 angeordnet und erstrecken sich im Wesentlichen in radialer Richtung. Die ersten Dichtvorsprünge 25 sind im Verhältnis zu den zweiten Dichtvorsprüngen 27 kürzer ausgebildet und weisen die gleiche Materialstärke auf wie die zweiten Dichtvorsprünge 27. Alternativ können die ersten und zweiten Dichtvorsprünge 25, 27 mit unterschiedlichen Materialstärken ausgebildet sein, so dass die ersten und zweiten Dichtvorsprünge 25, 27 eine voneinander abweichende Biegesteifigkeit aufweisen. In einer weiteren alternativen Ausführung können die ersten und zweiten Dichtvorsprünge 25, 27 relativ zu der äußeren Umfangsfläche 23 in einem schrägen Winkel angeordnet sein.

Der zweite Dichtkonus 5 weist an einer Stirnseite 9 einen flanschartigen Vorsprung 11 auf. Von dem flanschartigen Vorsprung 11 aus erstreckt sich eine Vielzahl von Vorsprüngen 15 im Wesentlichen parallel zueinander. Der zweite Dichtkonus 5 weist einen konischen Abschnitt 13 auf. Die Vorsprünge 15 des zweiten Dichtkonus 5 sind im Wesentlichen gleichmäßig entlang des Umfangs des flanschartigen Vorsprungs 11 um den konischen Abschnitt 13 herum verteilt. Von der Stirnseite 9 des zweiten Dichtkonus 5 aus erstrecken sich mehrere Ausnehmungen 16 durch den flanschartigen Vorsprung 11 hindurch. Die Ausnehmungen 16 sind vorzugsweise korrespondierend zu den Vorsprüngen 15 ausgebildet und erstrecken sich vorzugsweise innerhalb der Vorsprünge 15. Die Vorsprünge 15 sind somit vorzugsweise zumindest teilweise als Hohlkörper ausgebildet.

Der dritte Dichtkonus 7 weist an einer Stirnseite 29 einen flanschartigen Vorsprung 31 auf. Eine Vielzahl von Vorsprüngen 35 erstreckt sich im Wesentlichen parallel zueinander von dem flanschartigen Vorsprung 31 aus. Der dritte Dichtkonus 7 weist einen konischen Abschnitt 33 auf.

Anhand der Darstellung von Figur 1 wird die bevorzugte Vornahme der Montage der Dichtvorrichtung 1 beschrieben. Vorzugsweise wird der Dichtkörper 3 der Dichtvorrichtung 1 in die Öffnung eines Bewandungs-Abschnitts eingeführt. Für den Fall, dass der in diesem Ausführungsbeispiel an dem Dichtkörper 3 ausgebildete erste Dichtkonus 19 mit dem konischen Abschnitt 18 einen für die durchzuführende Leitung angemessenen Innendurchmesser aufweist, wird die Leitung unmittelbar in den Dichtkörper 3 eingeführt. Alternativ zu der in Figur 2 gezeigten Ausführungsform des einstückig an dem Dichtkörper 3 ausgebildeten ersten Dichtkonus 19, der ausschließlich aus dem konischen Abschnitt 18 besteht, ist gemäß einer alternativen Ausführungsform der erste Dichtkonus als separates Bauteil ausgebildet und reversibel lösbar mit dem Dichtkörper 3 verbindbar. An jenem ersten Dichtkonus, der als separates Bauteil ausgeführt ist, ist gemäß alternativer Ausführungsform ein konischer Abschnitt ausgebildet. Insoweit wird diesbezüglich auf die Ausführungen zu den zweiten und dritten Dichtkonen in dieser Anmeldung verwiesen. Die notwendige Klemmkraft zum Erreichen einer Dichtwirkung wird mittels eines (nicht dargestellten) Klemmkörpers aufgebracht. Der Klemmkörper weist vorzugsweise eine Vielzahl von Vorsprüngen auf, die sich in montiertem Zustand in die Ausnehmungen 21 des Dichtkörpers 3 hinein erstrecken, den Dichtkörper 3 elastisch zumindest in radialer Richtung verformen und mittels der elastischen Verformung eine Klemmkraft erzeugen. Die Klemmkraft wirkt je nach Ausbildung des Klemmkörpers und der Vorsprünge des Klemmkörpers gleichmäßig entlang des Umfangs des Dichtkörpers 3 oder gezielt ungleichmäßig.

Für den Fall, dass nicht der an dem Dichtkörper 3 ausgebildete erste Dichtkonus 19 den angemessenen Durchmesser aufweist, sondern ein kleinerer Durchmesser zum Durchführen der Leitung erforderlich ist, wird der zweite Dichtkonus 5, der als separates Bauteil ausgebildet ist, mit dem konischen Abschnitt 13 über die durchzuführende Leitung gestülpt. Sodann wird der zweite Dichtkonus 5 mit dem Dichtkörper 3 in Eingriff gebracht, indem die Vorsprünge 15 in die korrespondierend ausgebildeten Ausnehmungen 21 des Dichtkörpers 3 eingeführt werden. Vorzugsweise bewirken die Vorsprünge 15 eine elastische Verformung des Dichtkörpers 3 zumindest in radialer Richtung. Dies ist insbesondere der Fall, wenn die Dicke der Vorsprünge 15 zumindest partial größer ist als die entsprechende Abmessung der korrespondierenden Ausnehmung 21. Um ein Einführen der Vorsprünge 15 in die Ausnehmungen 21 zu erleichtern, sind die Vorsprünge 15 an einem zu dem flanschartigen Vorsprung 11 distalen Ende vorzugsweise verjüngt ausgebildet und weisen dort zumindest partial eine geringere Dicke auf als die Ausnehmungen 21 in dem stirnseitigen Abschnitt 17. Alternativ sind die Vorsprünge 15 insgesamt dünner ausgeführt als die Ausnehmungen 21, um ein Einführen des zweiten Dichtkonus 5 in den Dichtkörper 3 zu erleichtern. Die zur Abdichtung erforderliche Klemmkraft wird sodann wie zuvor beschrieben mittels eines Klemmkörpers aufgebracht, welcher Vorsprünge aufweist, die mit den korrespondierend ausgebildeten Ausnehmungen 16 im zweiten Dichtkonus 5 in Eingriff bringbar sind.

Alternativ zu der vorstehend beschriebenen Vorgehensweise wird der zweite Dichtkonus 5 mit dem Dichtkörper 3 in Eingriff gebracht und mit dem flanschartigen Vorsprung 11 in Anlage an die Stirnseite 17 des Dichtkörpers 3 gebracht, bevor die Leitung durch den konischen Abschnitt 13 des zweiten Dichtkonus 5 durchgeführt wird.

In Entsprechung zu der Montage des zweiten Dichtkonus 5 wird auch der dritte Dichtkonus 7 erforderlichenfalls entweder vor Einführen der Leitung in den konischen Abschnitt 33 oder danach mit dem Rest der Dichtvorrichtung 1 in Eingriff gebracht. Vorzugsweise wird der dritte Dichtkonus 7 mit dem zweiten Dichtkonus 5 in Eingriff gebracht. In eingebautem Zustand erstrecken sich die sich von dem flanschartigen Vorsprung 31 aus erstreckenden Vorsprünge 35 des dritten Dichtkonus 7 vollständig innerhalb der korrespondierend ausgebildeten Ausnehmung 16 in dem zweiten Dichtkonus 5. Die Vorsprünge 35 sind vorzugsweise dazu ausgebildet, eine elastische Verformung des zweiten Dichtkonus 5 oder optional zumindest der Vorsprünge 15 des zweiten Dichtkonus 5 zu bewirken, wodurch wiederum eine elastische Verformung des Dichtkörpers 3 bewirkt wird. Die Vorsprünge 35 sind vorzugsweise keilförmig ausgebildet, um das Einführen in den zweiten Dichtkonus 5 zu erleichtern und/oder das Aufbringen der Klemmkraft zu verbessern. An einem zu dem flanschartigen Vorsprung 31 distalen Ende sind die Vorsprünge 35 vorzugsweise verjüngt ausgebildet. Insoweit gilt das gleiche wie für die Vorsprünge 15 des zweiten Dichtkonus 5 und deren Zusammenspiel mit den korrespondierend ausgebildeten Ausbildungen 21 des Dichtkörpers 3.

Der vorstehend erwähnte Klemmkörper ist vorzugsweise ähnlich ausgebildet wie der dritte Dichtkonus 7, mit der Ausnahme, dass anstelle eines konischen Abschnitts 33 lediglich eine Durchgangsbohrung vorgesehen ist. Die Durchgangsbohrung weist optional an einer inneren Umfangsfläche eine Dichtlippe auf, die zur Aufnahme der durchzuführenden Leitung eingerichtet ist und zum Schutz gegen das Eindringen von Verschmutzungen und/oder Feuchtigkeit ausgebildet ist.

In Figur 2 ist die Dichtvorrichtung 1 in zusammengebautem Zustand dargestellt. Der zweite Dichtkonus 5 ist in den Dichtkörper 3 eingeführt. An dem stirnseitigen Abschnitt 17 des Dichtkörpers 3 befindet sich der flanschartige Vorsprung 11 des zweiten Dichtkonus 5 in Anlage mit dem Dichtkörper 3. Die Vorsprünge des zweiten Dichtkonus 5 sind vollständig innerhalb den korrespondierenden Ausnehmungen 21 des Dichtkörpers 3 angeordnet. In Figur 2 ist dargestellt, dass die Ausnehmungen 21 geringfügig weiter ausgebildet sind als die Vorsprünge 15 des zweiten Dichtkonus 5. Hierdurch entsteht ein innerer Spalt 37 und ein äußerer Spalt 39, welcher ein gewisses Spiel in radialer Richtung zwischen dem zweiten Dichtkonus 5 und dem Dichtkörper 3 bewirkt.

An der Stirnseite 9 des zweiten Dichtkonus 5 befindet sich der flanschartige Vorsprung 31 des dritten Dichtkonus 7 in Anlage mit dem zweiten Dichtkonus 5. Die Vorsprünge 35 des dritten Dichtkonus 7 sind vollständig innerhalb der Ausnehmungen 16 des zweiten Dichtkonus 5 angeordnet. Es ist kein Spalt zwischen den Vorsprüngen 35 und den Ausnehmungen 16 ausgebildet. Die Vorsprünge 35 sind vorzugsweise dazu ausgebildet, eine elastische Verformung des zweiten Dichtkonus 5 zumindest in radialer Richtung zu bewirken, wodurch zumindest der äußere Spalt 39 und optional auch der innere Spalt 37 innerhalb der Ausnehmung 21 des Dichtkörpers 3 zumindest teilweise geschlossen wird. Weiterhin ist festzustellen, dass der Dichtkörper 3 dazu eingerichtet ist, sich beim Einführen in die Öffnung eines Bewandungs-Abschnitts bereits elastisch zu verformen, und zwar derart, dass der äußere Umfang der Umfangsfläche 23 in radialer Richtung abnimmt, sodass in eingebautem Zustand auch der Spalt 39 vermindert oder vollständig geschlossen wird.

In Figur 2 ist weiterhin dargestellt, dass der erste Dichtkonus 19 einen konischen Abschnitt 18 aufweist, welcher an einer inneren Umfangsfläche 41 des Dichtkörpers 3 angeordnet ist und sich von dort aus erstreckt. Der konische Abschnitt 18 des ersten Dichtkonus 19, der konische Abschnitt 13 des zweiten Dichtkonus 5 und der konische Abschnitt 33 des dritten Dichtkonus 7 sind einander überlappend innerhalb des Dichtkörpers 3 angeordnet.

Die flanschartigen Vorsprünge 11, 31 des zweiten Dichtkonus 5 und des dritten Dichtkonus 7 schließen im Wesentlichen bündig mit der äußeren Umfangsfläche 23 des Dichtkörpers 3 ab.

In Figur 2 sind ebenfalls die ersten und zweiten Dichtvorsprünge 25, 27 dargestellt. Die ersten und zweiten Dichtvorsprünge 25, 27 sind alternierend und im Wesentlichen sich radial erstreckend an der äußeren Umfangsfläche 23 des Dichtkörpers 3 angeordnet.

Eine alternative Ausführung der erfindungsgemäßen Dichtvorrichtung ist in Figur 3 dargestellt. Die Dichtvorrichtung 1 weist wie auch die in die Figuren 1 und 2 dargestellte Dichtvorrichtung einen Dichtkörper 3 auf, an dessen innerer Umfangsfläche ein erster Dichtkonus 19 mit konischen Abschnitt 18 ausgebildet ist. Ein zweiter Dichtkonus 5 ist in den Dichtkörper 3 eingeführt und weist einen konischen Abschnitt 13 auf. Ein dritter Dichtkonus 7 ist ebenfalls in den Dichtkörper 3 eingeführt und zudem in den zweiten Dichtkonus 5 eingeführt. Der dritte Dichtkonus 7 weist einen konischen Abschnitt 33 auf. Die konischen Abschnitte 18, 13, 33 sind einander überlappend und im Wesentlichen koaxial innerhalb des Dichtkörpers 3 angeordnet. Der Dichtkörper 3 weist an seiner äußeren Umfangsfläche 23 erste und zweite Dichtvorsprünge 25, 27 auf.

Im Unterschied zu der in Figur 1 und 2 gezeigten Ausführungsform weist der Dichtkörper 3 keine Vielzahl von Ausnehmungen 21 auf, sondern lediglich eine Ausnehmung 21', welche im Wesentlichen ringförmig innerhalb des Dichtkörpers 3 von dessen Stirnseite 17 aus ausgebildet ist. Der zweite Dichtkonus 5 weist einen im Wesentlichen ringförmigen Vorsprung 15' auf, der sich von den flanschartigen Vorsprung 11 aus erstreckt und innerhalb der Ausnehmung 21' des Dichtkörpers 3 angeordnet ist.

Der dritte Dichtkonus 7 weist einen im Wesentlichen ringförmig ausgebildeten Vorsprung 35' auf, welcher sich von dem flanschartigen Vorsprung 31 aus erstreckt und im dargestellten, eingebauten Zustand vollständig innerhalb der Ausnehmung 16' des zweiten Dichtkonus 5 angeordnet ist. Die Ausnehmung 16' des zweiten Dichtkonus 5 ist im Wesentlichen ringförmig ausgebildet.

Das in Figur 3 gezeigte Ausführungsbeispiel zeichnet unter anderem dadurch aus, dass zusätzliche Haltemittel vorgesehen sind, welche die Positionierung der Bauteile der Dichtvorrichtung 1 zueinander unterstützen. Innerhalb der Ausnehmung 21' in dem Dichtkörper 3 ist an einer inneren Umfangsfläche eine Ausnehmung 43 vorgesehen. Die Ausnehmung 43 ist ringförmig ausgebildet und erstreckt sich entlang des Umfangs der Ausnehmung 21'. An der inneren Umfangsfläche des Vorsprungs 15' ist ein Vorsprung 45 ausgebildet. Der Vorsprung 45 ist vorzugsweise ringförmig ausgebildet. Alternativ sind mehrere segmentartige Vorsprünge 45 an der Umfangsfläche des Vorsprungs 15' angeordnet und entlang des Umfangs der Umfangsfläche verteilt. In eingebautem Zustand, welche in Figur 3 dargestellt ist, erstrecken sich der bzw. die Vorsprünge 45 innerhalb der Ausnehmung 43 des Dichtkörpers 3.

In der Ausnehmung 16' des zweiten Dichtkonus 5 ist an einer inneren Umfangsfläche eine Ausnehmung 47 vorgesehen. Die Ausnehmung 47 ist vorzugweise ringförmig ausgebildet und erstreckt sich entlang des Umfangs der Ausnehmung 16'. Der Vorsprung 35' des dritten Dichtkonus 7 weist an einer inneren Umfangsfläche einen Vorsprung 49 auf. In eingebautem Zustand erstreckt sich der Vorsprung 49 innerhalb der Ausnehmung 47.

Durch das in Eingriff bringen der Vorsprünge 45, 49 in die jeweils korrespondierend angeordneten Ausnehmungen 43, 47 werden die Bauteile des Dichtkörpers 3, des zweiten Dichtkonus 5 und des dritten Dichtkonus 7 miteinander verrastet. Hierdurch wird ein unbeabsichtigtes Lösen der Bauteile voneinander erschwert.

Ein weiteres Unterscheidungsmerkmal ist in Figur 3 in Bezug auf die stirnseitigen Abschlüsse der Bauteile relativ zueinander dargestellt. Der zweite Dichtkonus 5 und der dritte Dichtkonus 7 schließen im Bereich der Stirnseite 17 des Dichtkörpers 3 bündig mit dem Dichtkörper 3 ab. Es ist eine im Wesentlichen ebene Gesamt-Stirnfläche 49 ausgebildet. Dadurch, dass die flanschartigen Vorsprünge der Dichtkonen 5, 7 vollständig innerhalb des Dichtkörpers 3 anordnet sind, ist die Einbautiefe des Dichtkörpers 3 und somit der Dichtvorrichtung 1 insgesamt minimiert.

## Patentansprüche

1. Dichtvorrichtung (1) zur Abdichtung eines Spalts zwischen einer Öffnung in einem Bewandungs-Abschnitt und mindestens einer durch die Öffnung durchgeführten Leitung, mit einem elastisch verformbaren Dichtkörper (3), der in die Öffnung des Bewandungs-Abschnitts einführbar ist und dazu eingerichtet ist, diese abzudichten, wobei ein als zweiter bezeichneter Dichtkonus (5) koaxial zu dem Dichtkörper (3) ausgerichtet und angeordnet ist, oder mehrere als zweite, dritte usw. bezeichnete Dichtkonen (5, 7) koaxial zu dem Dichtkörper (3) ausgerichtet und überlappend angeordnet sind, wobei der oder die Dichtkonen (5; 5, 7) mittels einer reversibel lösbaren Verbindung, vorzugsweise einer Steckverbindung, derart mit dem Dichtkörper (3) verbindbar ist bzw. sind, dass zerstörungsfrei eine Lösung und erneute Verbindung des oder der Dichtkonen (5; 5, 7) herbeiführbar ist,
wobei der oder die Dichtkonen (5; 5, 7) einen konischen Dicht-Abschnitt (13, 33) aufweisen, dessen lichte Weite partiell geringer als der äußere Durchmesser der durch den jeweiligen Dichtkonus (5; 5,7) durchzuführenden Leitung ist, derart, dass der konische Dicht-Abschnitt (13, 33) infolge einer Durchführung der durchzuführenden Leitung jedenfalls in dem Bereich, dessen lichte Weite geringer als der äußere Durchmesser der durchzuführenden Leitung ist, gedehnt wird,
wobei der als zweite bezeichnete Dichtkonus (5) als separates Bauteil ausgebildet ist, **dadurch gekennzeichnet, dass** der als zweite bezeichnete Dichtkonus (5) eine Stirnseite (9) aufweist, an welcher ein flanschartiger Vorsprung (11) ausgebildet ist, der mit einer Stirnseite (17) des Dichtkörpers (3) korrespondiert,
wobei sich von dem flanschartigen Vorsprung des zweiten Dichtkonus (5) ein Vorsprung oder mehrere Vorsprünge (15, 15') erstrecken, welche jeweils mit einer Ausnehmung (21, 21') in der Stirnseite (17) des Dichtkörpers (3) korrespondieren, und
wobei der oder die Vorsprünge (15, 15') zur Verformung des Dichtkörpers (3) in die Ausnehmungen (21, 21') in der Stirnseite (17) des Dichtkörpers (3) einführbar sind.

2. Dichtvorrichtung (1) nach Anspruch 1,
**dadurch gekennzeichnet, dass** ein weiterer als erster bezeichneter Dichtkonus (19) einstückig an einer inneren Umfangsfläche (41) des Dichtkörpers (3) ausgebildet ist, wobei der erste Dichtkonus (19) einen konischen Dicht-Abschnitt (18) mit einem für die durchzuführende Leitung angemessenen Durchmesser aufweist.

3. Dichtvorrichtung nach Anspruch 1,
**dadurch gekennzeichnet, dass** ein weiterer als erster bezeichneter Dichtkonus als separates Bauteil ausgebildet ist, welches mittels einer reversibel lösbaren Verbindung derart mit dem Dichtkörper verbindbar ist, dass zerstörungsfrei eine Lösung und erneute Verbindung des ersten Dichtkonus herbeiführbar ist, wobei der erste Dichtkonus einen konischen Dicht-Abschnitt mit einem für die durchzuführende Leitung angemessenen Innendurchmesser aufweist.

4. Dichtvorrichtung (1) nach einem der vorstehenden Ansprüche,
**dadurch gekennzeichnet, dass** der als dritte bezeichnete Dichtkonus (7) als separates Bauteil ausgebildet ist und eine Stirnseite (29) aufweist, an welcher ein flanschartiger Vorsprung (31) ausgebildet ist, der mit einer Stirnseite (17) des Dichtkörpers (3) und/oder mit einer Stirnseite (9) des zweiten Dichtkonus (5) korrespondiert.

5. Dichtvorrichtung (1) nach Anspruch 4,
**dadurch gekennzeichnet, dass** sich von dem flanschartigen Vorsprung (31) des dritten Dichtkonus (7) ein Vorsprung oder mehrere Vorsprünge (35 ,35') erstrecken, welche jeweils mit einer Ausnehmung (16, 16', 21, 21') in der Stirnseite (9) des zweiten Dichtkonus und/oder in der Stirnseite (17) des Dichtkörpers (3) korrespondieren.

6. Dichtvorrichtung (1) nach Anspruch 4,
**dadurch gekennzeichnet, dass** der oder die sich von dem flanschartigen Vorsprung (31) des dritten Dichtkonus (7) aus erstreckenden Vorsprünge (35, 35') zur Verformung des Dichtkörpers (3) in die Ausnehmungen (21, 21') in der Stirnseite (17) des Dichtkörpers (3) oder in die Ausnehmungen (16, 16') in der Stirnseite des zweiten Dichtkonus (5) einführbar sind.

7. Dichtvorrichtung (1) nach einem der vorstehenden Ansprüche,
**dadurch gekennzeichnet, dass** der konische Abschnitt (13, 18, 33) der Dichtkonen (5, 7, 19) elastisch stärker verformbar ist als der Rest der Dichtkonen (5, 7, 19).

8. Dichtvorrichtung (1) nach einem der vorstehenden Ansprüche,
**dadurch gekennzeichnet, dass** der Dichtkörper (3) eine äußere Umfangsfläche (23) aufweist, an welcher mehrere Dichtvorsprünge (25, 27) ausgebildet und in Umfangsrichtung und/oder axial ausgerichtet sind.

9. Dichtvorrichtung (1) nach einem der vorstehenden Ansprüche,
**gekennzeichnet durch** einen im Wesentlichen ringförmigen Klemmkörper mit einer Stirnseite und sich von der Stirnseite aus erstreckenden Vorsprüngen, die zur Verformung des Dichtkörpers (3) und/oder mindestens eines der Dichtkonen (5, 7, 19) in korrespondierende Ausnehmungen (16, 21) in der Stirnseite (17) des Dichtkörpers und/oder der Stirnseite (9) des mindestens Einen der Dichtkonen (5, 7, 19) einführbar sind.

10. Dichtvorrichtung (1) nach Anspruch 9,
**dadurch gekennzeichnet, dass** der Klemmkörper mehrteilig, insbesondere zweiteilig ausgebildet ist und eine entsprechende Anzahl Teilkörper aufweist.

11. Dichtvorrichtung (1) nach einem der vorstehenden Ansprüche,
**gekennzeichnet durch** mehrere Gruppen von Dichtkonen, wobei die Dichtkonen innerhalb einer Gruppe jeweils koaxial innerhalb des Umfangs des Dichtkörpers (3) angeordnet sind, und die Gruppen zueinander parallel ausgerichtet sind.

## Claims

1. A sealing device (1) for sealing a gap between an opening in a wall section and at least one line that is guided through the opening, having a resiliently deformable sealing body (3) which may be introduced into the opening in the wall section and which is set up to seal the opening,
wherein a sealing cone (5), designated the second sealing cone, is arranged and aligned coaxially with the sealing body (3), or a plurality of sealing cones (5, 7), designated the second, third and so on sealing cones, are aligned coaxially with the sealing body (3) and arranged such that they overlap, wherein the sealing cone or cones (5; 5, 7) may be connected to the sealing body (3) by means of a reversibly releasable connection, preferably a plug-in connection, such that a release and renewed connection of the sealing cone or cones (5; 5, 7) may be performed non-destructively,
wherein the sealing cone or cones (5; 5, 7) have a conical sealing portion (13, 33), whereof the internal clearance is in part smaller than the external diameter of the line that is to be guided through the respective sealing cone (5; 5, 7) such that the conical sealing portion (13, 33) is distended, as a result of guiding through the line that is to be guided through, in each case in the region in which the internal clearance is smaller than the external diameter of the line that is to be guided through,
wherein the sealing cone (5) designated the second sealing cone is formed as a separate component,
**characterised in that** the sealing cone (5) designated the second sealing cone has an end face (9) on which there is formed a flange-like projection (11) which corresponds with an end face (17) of the sealing body (3),
wherein there extends from the flange-like projection of the second sealing cone (5) a projection or a plurality of projections (15, 15') that each correspond with a cutout (21, 21') in the end face (17) of the sealing body (3), and
wherein, for deformation of the sealing body (3), the projection or projections (15, 15') may be introduced into the cutouts (21, 21') in the end face (17) of the sealing body (3).

2. A sealing device (1) according to Claim 1,
**characterised in that** a further sealing cone (19), designated the first sealing cone, is formed in one piece on an inner peripheral face (41) of the sealing body (3), wherein the first sealing cone (19) has a conical sealing portion (18) having a diameter that is appropriate to the line that is to be guided through.

3. A sealing device (1) according to Claim 1,
**characterised in that** a further sealing cone, designated the first sealing cone, is formed as a separate component that may be connected to the sealing body by means of a reversibly releasable connection such that a release and renewed connection of the first sealing cone may be performed non-destructively, wherein the first sealing cone has a conical sealing portion having an internal diameter that is appropriate to the line that is to be guided through.

4. A sealing device (1) according to one of the preceding claims,
**characterised in that** the sealing cone (7) that is designated the third sealing cone is formed as a separate component and has an end face (29) on which there is formed a flange-like projection (31) which corresponds with an end face (17) of the sealing body (3) and/or an end face (9) of the second sealing cone (5).

5. A sealing device (1) according to Claim 4,
**characterised in that** there extends from the flange-like projection (31) of the third sealing cone (7) a projection or a plurality of projections (35, 35') that each correspond with a cutout (16, 16', 21, 21') in the end face (9) of the second sealing cone and/or the end face (17) of the sealing body (3).

6. A sealing device (1) according to Claim 4,
**characterised in that**, for deformation of the sealing body (3), the projection or projections (35, 35') that extend from the flange-like projection (31) of the third sealing cone (7) may be introduced into the cutouts (21, 21') in the end face (17) of the sealing body (3) or the cutouts (16, 16') in the end face of the second sealing cone (5).

7. A sealing device (1) according to one of the preceding claims,
**characterised in that** the conical portion (13, 18, 33) of the sealing cones (5, 7, 19) is resiliently deformable to a greater extent than the rest of the sealing cones (5, 7, 19).

8. A sealing device (1) according to one of the preceding claims,
**characterised in that** the sealing body (3) has an external peripheral face (23) on which a plurality of sealing projections (25, 27) are formed and are aligned in the peripheral direction and/or axially.

9. A sealing device (1) according to one of the preceding claims,
**characterised by** a substantially annular clamping body having an end face and projections which extend from the end face and which, for deformation of the sealing body (3) and/or at least one of the sealing cones (5, 7, 19), may be introduced into corresponding cutouts (16, 21) in the end face (17) of the sealing body and/or the end face (9) of the at least one of the sealing cones (5, 7, 19).

10. A sealing device (1) according to Claim 9,
**characterised in that** the clamping body is formed in a plurality of parts, in particular in two parts, and has a corresponding number of part bodies.

11. A sealing device (1) according to one of the preceding claims,
**characterised by** a plurality of groups of sealing cones, wherein the sealing cones within a group are each arranged coaxially within the periphery of the sealing body (3), and the groups are aligned parallel to one another.

## Revendications

1. Dispositif d'étanchéité (1) destiné à assurer l'étanchéité d'une fente entre une ouverture dans une partie de paroi et au moins une conduite menée à travers l'ouverture, avec un corps d'étanchéité élastiquement déformable (3), qui peut être introduit dans l'ouverture de la partie de paroi et qui est conçu pour la rendre étanche,
dans lequel un cône d'étanchéité (5), à savoir un deuxième, est orienté et disposé coaxialement au corps d'étanchéité (3), ou plusieurs cônes d'étanchéité (5, 7), à savoir un deuxième, un troisième, etc., sont orientés et disposés avec un recouvrement coaxialement au corps d'étanchéité (3), dans lequel le ou les cône (s) d'étanchéité (5; 5, 7) sont ou peuvent être assemblés au corps d'étanchéité (3), au moyen d'un assemblage séparable réversible, de préférence un assemblage par enfichage, de telle manière qu'une séparation et un nouvel assemblage des cônes d'étanchéité (5; 5, 7) puissent être réalisés sans destruction,
dans lequel le ou les cône (s) d'étanchéité (5; 5, 7) présente(nt) une partie d'étanchéité conique (13, 33), dont la largeur libre est en partie inférieure au diamètre extérieur de la conduite à mener à travers le cône d'étanchéité respectif (5; 5, 7), de telle manière que la partie d'étanchéité conique (13, 33) soit étendue par suite de l'introduction de la conduite à introduire en tout cas dans la région dont la largeur libre est inférieure au diamètre extérieur de la conduite à introduire,
dans lequel ledit deuxième cône d'étanchéité (5) est réalisé sous forme de composant séparé,
**caractérisé en ce que** ledit deuxième cône d'étanchéité (5) présente une face frontale (9), sur laquelle est formée une saillie en forme de bride (11), qui correspond à une face frontale (17) du corps d'étanchéité (3),
dans lequel une saillie ou plusieurs saillies (15, 15') s'étend(ent) à partir de la saillie en forme de bride du deuxième cône d'étanchéité (5), qui correspond(ent) respectivement avec un évidement (21, 21') dans la face frontale (17) du corps d'étanchéité (3), et
dans lequel la ou les saillie(s) (15, 15') peut/peuvent être introduite (s) dans les évidements (21, 21') dans la face frontale (17) du corps d'étanchéité (3) pour la déformation du corps d'étanchéité (3).

2. Dispositif d'étanchéité (1) selon la revendication 1, **caractérisé en ce qu'**un autre cône d'étanchéité (19), à savoir un premier, est réalisé d'une seule pièce sur une surface périphérique intérieure (41) du corps d'étanchéité (3), dans lequel le premier cône d'étanchéité (19) présente une partie d'étanchéité conique (18) avec un diamètre adapté à la conduite à introduire.

3. Dispositif d'étanchéité selon la revendication 1, **caractérisé en ce qu'**un autre cône d'étanchéité, à savoir un premier, est réalisé sous forme de composant séparé, qui peut être assemblé au corps d'étanchéité au moyen d'un assemblage séparable réversible, de telle manière qu'une séparation et un nouvel assemblage du premier cône d'étanchéité puissent être réalisés sans destruction, dans lequel le premier cône d'étanchéité présente une partie d'étanchéité conique avec un diamètre intérieur adapté à la conduite à introduire.

4. Dispositif d'étanchéité (1) selon l'une quelconque des revendications précédentes, **caractérisé en ce que** ledit troisième cône d'étanchéité (7) est réalisé sous forme de composant séparé et présente une face frontale (29), sur laquelle est formée une saillie en forme de bride (31), qui correspond à une face frontale (17) du corps d'étanchéité (3) et/ou à une face frontale (9) du deuxième cône d'étanchéité (5).

5. Dispositif d'étanchéité (1) selon la revendication 4, **caractérisé en ce qu'**une saillie ou plusieurs saillies (35, 35') s'étend(ent) à partir de la saillie en forme de bride (31) du troisième cône d'étanchéité (7), qui correspond(ent) respectivement à un évidement (16, 16', 21, 21') dans la face frontale (9) du deuxième cône d'étanchéité et/ou dans la face frontale (17) du corps d'étanchéité (3).

6. Dispositif d'étanchéité (1) selon la revendication 4, **caractérisé en ce que** la ou les saillie (s) (35, 35') s'étendant à partir de la saillie en forme de bride (31) du troisième cône d'étanchéité (7) peut/peuvent être introduite (s) dans les évidements (21, 21') dans la face frontale (17) du corps d'étanchéité (3) ou dans les évidements (16, 16') dans la face frontale du deuxième cône d'étanchéité (5) pour la déformation du corps d'étanchéité (3).

7. Dispositif d'étanchéité (1) selon l'une quelconque des revendications précédentes, **caractérisé en ce que** la partie conique (13, 18, 33) des cônes d'étanchéité (5, 7, 19) est élastiquement plus robuste que le reste des cônes d'étanchéité (5, 7, 19).

8. Dispositif d'étanchéité (1) selon l'une quelconque des revendications précédentes, **caractérisé en ce que** le corps d'étanchéité (3) présente une surface périphérique extérieure (23), sur laquelle plusieurs saillies d'étanchéité (25, 27) sont formées et sont orientées en direction périphérique et/ou axiale.

9. Dispositif d'étanchéité (1) selon l'une quelconque des revendications précédentes, **caractérisé par** un corps de serrage essentiellement annulaire avec une face frontale et des saillies s'étendant à partir de la face frontale, qui peuvent être introduites dans des évidements correspondants (16, 21) dans la face frontale (17) du corps d'étanchéité et/ou dans la face frontale (9) d'au moins un des cônes d'étanchéité (5, 7, 19), pour la déformation du corps d'étanchéité (3) et/ou dudit au moins un des cônes d'étanchéité (5, 7, 19).

10. Dispositif d'étanchéité (1) selon la revendication 9, **caractérisé en ce que** le corps de serrage est réalisé en plusieurs parties, en particulier en deux parties, et présente un nombre correspondant de corps partiels.

11. Dispositif d'étanchéité (1) selon l'une quelconque des revendications précédentes, **caractérisé par** plusieurs groupes de cônes d'étanchéité, dans lequel les cônes d'étanchéité à l'intérieur d'un groupe sont chacun disposés coaxialement à l'intérieur de la périphérie du corps d'étanchéité (3), et les groupes sont orientés parallèlement l'un à l'autre.
